# EUROPÄISCHE PATENTSCHRIFT

(11) **EP 0 617 269 B1**
(45) Veröffentlichungstag und Bekanntmachung des Hinweises auf die Patenterteilung: **09.07.1997**
(21) Anmeldenummer: 94102767.4
(22) Anmeldetag: 24.02.1994
(51) Int. Cl.: G01M 3/16, G01M 3/04

(54) **Vorrichtung zur Leckagedetektion**
Leak detector
Dispositif de détection de fuites

(30) Priorität: 23.03.1993 DE 4309284
(43) Veröffentlichungstag der Anmeldung: 28.09.1994
(73) Patentinhaber: SZE SPEZIAL ELEKTRONIK HAGENUK GmbH, 24147 Klausdorf (DE)
(72) Erfinder: Merz, Jürgen, Dr., D-24326 Kalübbe (DE)
(74) Vertreter: Hansmann, Dierk, Dipl.-Ing.

(56) Entgegenhaltungen:
- EP-A- 0 170 174
- EP-A- 0 341 933
- DE-A- 3 441 924

## Beschreibung

Die Erfindung betrifft eine Vorrichtung zur Leckagedetektion im Bereich von Einrichtungen, die Säuren beinhalten, die im wesentlichen aus zwei elektrischen Leitern ausgebildet ist, und bei der die Leiter als Innenleiter und als Außenleiter ausgebildet und koaxial zueinander angeordnet sind und gemeinsam mit einer von einer zu detektierenden Flüssigkeit durchdringbaren Umhüllung ein Detektionskabel ausbilden und bei der die Umhüllung aus einem Material ausgebildet ist, das ausschließlich selektiv von mindestens einer zu detektierenden Säure durchdringbar ist und bei der ein innerer Aufbau des Detektionskabels nichtselektiv von einer Mehrzahl von Säuren durchdringbar ist.

Derartige Vorrichtungen sind bereits bekannt, um nichtselektiv hydrophile oder lipophile Flüssigkeiten zu detektieren. Eine entsprechende nichtselektive Vorrichtung wird beispielsweise in der US-PS 4 797 621 angegeben. Die entsprechend diesem Stand der Technik verlegten Sensorkabel können nicht frei verlegt werden, da beispielsweise Regenwasser oder andere Feuchtigkeit gleichfalls zu einem Ansprechen führen können. Darüber hinaus kann es zu einem zulässigen Betriebsbereich gehören, daß bestimmte Säuren oder flüssige Chemikalien anwesend sind, ohne daß ein entsprechendes Detektionssignal ausgelöst werden soll, beziehungsweise eine Beschädigung des Detektionskabels tolerierbar ist.

Zur Gewährleistung einer ausreichenden Verlegungssicherheit ist es nach dem Stand der Technik erforderlich, Doppelmantelrohre zu verwenden, die vergleichsweise hohe Installationskosten zur Folge haben und eine Nachrüstung erheblich verteuern.

Aus der EP 0 341 933 A2 ist bereits eine koaxiale Anordnung eines Kabels zur Detektion von Leckagen bekannt, das für eine Säuredetektion verwendbar ist. Eine äußere Schicht ist aus einzelnen Leitern ausgebildet, die derart relativ zueinander angeordnet sind, daß ein Feuchtigkeitsdurchtritt ermöglicht ist. Gleichfalls besteht der Innenleiter aus einer Mehrzahl von einzelnen Adern. Zwischen dem Außenleiter und dem Innenleiter ist eine Aluminiumschicht angeordnet, die relativ zum Innenleiter von einem elektrisch nichtleitenden Material abgestützt ist, das einen Durchtritt von Feuchtigkeit ermöglicht. Bei einem Eindringen bestimmter Säuren wird die Aluminiumschicht aufgelöst und eine elektrisch leitfähige Verbindung zwischen dem Innenleiter und dem Außenleiter hergestellt. Aufgrund der chemischen Eigenschaften des Aluminiums ist lediglich eine Detektion von nichtoxidierenden Säuren in hoher Konzentration, beispielsweise von Salzsäure, möglich. Oxidierende Säuren, beispielsweise Salpetersäure, können hingegen nicht detektiert werden, da sich auf dem Aluminium eine schützende Oxidschicht bildet, die ein Angreifen der Säure verhindert. Derartige oxidierende Säuren können somit nicht nachgewiesen werden, andererseits ist ein selektiver Ausschluß von Laugen nicht möglich, da auch diese das Aluminium auflösen.

In der US 577 966 wird eine koaxiale Kabelanordnung zur Detektion von Kohlenwasserstoffen beschrieben, die in Gegenwart von Wasser auftreten. Die koaxiale Anordnung ist von einer ebenfalls koaxial ausgebildeten Umhüllung umgeben, die einen Durchtritt von Wasserbestandteilen verhindert, andererseits aber einen Durchtritt von Kohlenwasserstoffen erlaubt. Eine Säuredetektion ist mit einer derartigen Anordnung nicht möglich.

Aus der DE 34 41 924 C2 ist eine weitere Vorrichtung zur Detektion von Leckagen bekannt. Die Vorrichtung ermöglicht ein Ansprechen auf auftretende Leckagen mit äußerst geringer zeitlicher Verzögerung. Es ist jedoch nicht möglich, ein selektives Ansprechen vorzusehen.

Die US 20 56 085 beschreibt einen Kabelaufbau, mit dem in das Kabel eingedrungene Feuchtigkeit oder Flüssigkeiten detektiert werden können. Es ist somit nicht möglich, mit diesem Kabel selektiv bestimmte Säuren zu detektieren. Im Inneren des Kabels sind eine Mehrzahl von Leitern angeordnet, die im Bereich einer äußeren Umhüllung des Kabels zur Verbesserung der mechanischen Stabilität sowie zur Abschirmung von einem spiralartig verlegten Leiter umschlossen sind.

Aufgabe der vorliegenden Erfindung ist es daher, eine Vorrichtung der einleitend genannten Art derart zu verbessern, daß eine einfache Verlegung ermöglicht wird.

Diese Aufgabe wird erfindungsgemäß dadurch gelöst, daß die Umhüllung beide Leiter koaxial umschließt und daß sich zwischen dem Innenleiter und dem Außenleiter ein Abstandshalter erstreckt, der als eine elektrisch nichtleitende Spirale ausgebildet ist.

Diese Ausbildung ermöglicht es, ein vergleichsweise preiswertes nichtselektives Kabel mit einer selektiven Umhüllung zu versehen. Durch die selektiv wirkende Umhüllung ist eine freie Verlegung des Detektionskabels ohne eine Verwendung von Doppelmantelrohren möglich.

Ein Einsatz kann beispielsweise zur Detektion von Leckagen in säureführenden Anlagen erfolgen. Aufgrund der selektiven Eigenschaften der Umhüllung ist eine Unempfindlichkeit gegenüber von Regenwasser gegeben, so daß eine freie Verlegung des Detektionskabels auch außerhalb von Gebäuden möglich ist. Bei einer geeigneten Wahl des Umhüllungsmaterials liegt darüber hinaus eine Umempfindlichkeit gegenüber einer weiteren großen Anzahl nichtsaurer Chemikalien vor. Zur Detektion einer Leckage kann an das Detektionskabel ein ortendes oder ein nichtortendes Meßgerät angeschlossen werden. Zur Realisierung einer Ortung ist es beispielsweise möglich, ein Impulsreflektometer zu verwenden. Durch ein derartiges Gerät läßt sich die Entfernung zu einer Störungsstelle durch Auswertung von Impulslaufzeiten bestimmen. Mit Hilfe eines Kapazitätsmeßgerätes ist eine nichtortende Detektion möglich. Hier wird lediglich festgestellt, ob in irgendeinem Bereich der Kabelverlegung eine Störung aufgetreten ist.

Durch die koaxiale Anordnung der Leiter wird eine besonders störunanfällige Anordnung bereitgestellt. Die Verwendung eines Abstandshalters zwischen dem Innenleiter und dem Außenleiter ermöglicht es, ein definiertes Verhalten bei einem Einwirken von mechanischen Belastungen hervorzurufen. Durch die Ausbildung des Abstandshalters als elektrisch nichtleitende Spirale wird eine leichte Ausführungsform bereitgestellt, die einfach von der zu detektierenden Flüssigkeit durchdrungen werden kann. Hierdurch wird ein elektrischer Kontakt im Falle der Detektion einer Säure sichergestellt.

Eine zweckmäßige Ausgestaltung besteht darin, daß die Umhüllung von der zu detektierenden Flüssigkeit auflösbar ist.

Darüber hinaus ist aber auch denkbar, eine Materialauswahl derart zu treffen, daß die Umhüllung von der zu detektierenden Flüssigkeit aufweichbar ist.

Schließlich ist es ebenfalls möglich, daß die Umhüllung die zu detektierende Flüssigkeit hindurchlassende und weitere Flüssigkeiten sperrende siebende Eigenschaften aufweist.

Definierte elektrische Verhältnisse vor einer Detektion werden dadurch bereitgestellt, daß der Innenleiter von einer Isolierung umschlossen ist.

Zur Ermöglichung einer Freiverlegung ist es insbesondere zweckmäßig, daß die Umhüllung säureselektiv und wasserbeständig ausgebildet ist.

Eine gute Durchdringbarkeit des Außenleiters wird dadurch bereitgestellt, daß der Außenleiter als ein Metallgeflecht ausgebildet ist.

Eine weitere Verbesserung der mechanischen Eigenschaften sowie der funktionellen Eigenschaften wird dadurch ermöglicht, daß die Umhüllung von einem netzartigen Außenmantel umschlossen ist.

In der Zeichnung sind Ausführungsbeispiele der Erfindung schematisch dargestellt. Es zeigen:
- Fig. 1: eine perspektivische Prinzipdarstellung des Detektionskabels nach der vorliegenden Erfindung **und**
- Fig. 2: einen Querschnitt durch ein einfacheres Detektionskabel.

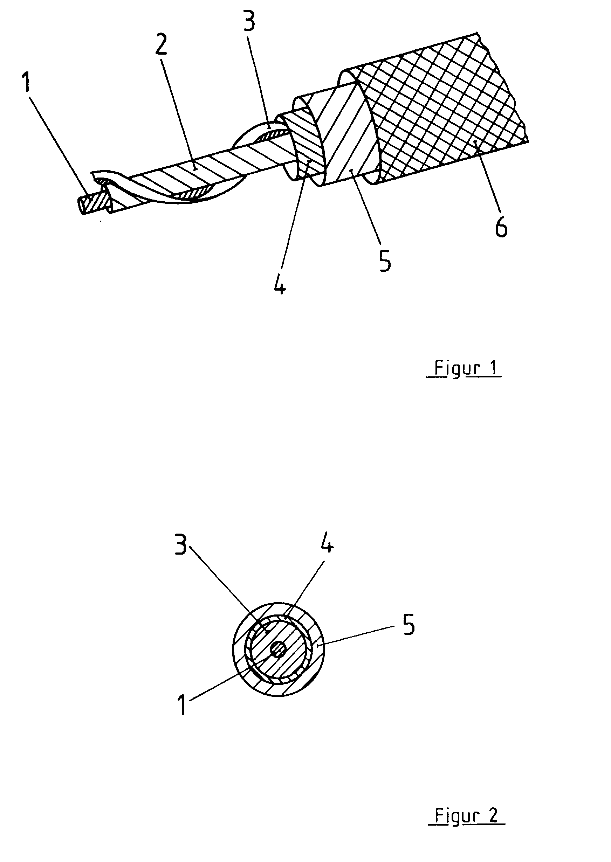

In Figur 1 wird ein erfindungsgemäßes Detektionskabel gezeigt.

Das Detektionskabel besteht im wesentlichen aus einem relativ zum Durchmesser dünnen Innenleiter (1), der beispielsweise aus Kupfer ausgebildet sein kann. Der Innenleiter (1) ist von einer Isolierung (2) umschlossen, die beispielsweise als eine Kunststoffisolierung ausgebildet sein kann. Als Material kommt spielsweise PTFE in Frage. Mit einem Abstand zum Innen-Leiter (1) ist ein Außenleiter (4) verlegt, der beispielsweise aus einem Kupfergeflecht ausgebildet sein kann. Zur Gewährleistung eines ausreichenden Abstandes des Innenleiters (1) vom Außenleiter (4) ist ein Abstandshalter (3) vorgesehen, der als eine elektrisch nichtleitende Spirale ausgebildet ist. Beispielweise wäre aber auch ein geschäumtes oder saugfähiges Material denkbar, das von der zu detektierenden Flüssigkeit durchdringbar ist. Bei einer Ausbildung des Abstandshalters (3) als Spirale kann beispielsweise ein Kunststoff oder ein Glasfasermaterial verwendet werden.

Eine zweckmäßige Ausgestaltung besteht darin, daß die Abmessungen des Innenleiters (1) und des Außenleiters (4) so gewählt werden, daß die Impedanz des Detektionskabels 50 Ohm beträgt. Der Außenleiter (4) ist mit einer Umhüllung (5) versehen, die selektiv von der zu detektierenden Flüssigkeit in ihrer Konsistenz beeinflußbar ist. Insbesondere ist es zweckmäßig, beispielsweise bei einer vorgesehenen Detektion einer Säure eine Auflösung der Umhüllung (5) vorzusehen. Hierzu kann die Umhüllung (5) als ein geeigneter Kunststoffmantel ausgebildet sein. Als Materialien kommen hierbei zum Beispiel PA12, ein POM-Kautschuk-Mischpolymerisat oder ein entsprechend sensitiver Polyester in Frage.

Für eine weitere Verbesserung der mechanischen Eigenschaften ist für die Realisierung der Umhüllung (5) eine Kombination mit Kopolymeren denkbar, die beispielsweise Eigenschaften wie Abriebfestigkeit, Dehnbarkeit und Bruchfestigkeit erhöhen.

Um bei einer Freiverlegung die UV-Beständigkeit zu verbessern, kann die Umhüllung (5) schwarz eingefärbt werden. Eine zusätzliche Verbesserung der mechanischen Eigenschaften kann durch einen Außenmantel (6) realisiert werden, der die Umhüllung (5) umgibt. Ein Außenmantel (6) kann beispielsweise als ein Geflecht aus fluorierten Fasern aus Kunststoff ausgebildet sein. Neben der Verbesserung der mechanischen Belastbarkeit hat ein derartiger Außenmantel auch den Vorteil, daß die Saugfähigkeit des Detektionskabels erhöht wird, eine weitere Verbesserung der UV-Beständigkeit realisiert werden kann und daß ganz generell ein Schutz gegen Beschädigung erhöht wird.

In Fig. 1 ist ein Aufbau des erfindungsgemäßen Detektionskabels mit Innenleiter (1), Isolierung (2), Abstandshalter (3), Außenleiter (4), Umhüllung (5) und Außenmantel (6) dargestellt. Eine vereinfachte, nicht beanspruchte, Ausführungsform zeigt Fig. 2. Es wurde hier auf die Isolierung (2) des Innenleiters (1) sowie auf den Außenmantel (6) verzichtet. Darüber hinaus ist der Abstandshalter (3) nicht als Spirale, sondern als von der zu detektierenden Flüssigkeit durchdringbare Substanz ausgebildet.

## Patentansprüche

1. Vorrichtung zur Leckagedetektion im Bereich von Einrichtungen, die Säuren beinhalten, die im wesentlichen aus zwei elektrischen Leitern (1, 4) ausgebildet ist, und bei der die Leiter als Innenleiter (1) und als Außenleiter (4) ausgebildet und koaxial zueinander angeordnet sind und gemeinsam mit einer von einer zu detektierenden Flüssigkeit durchdringbaren Umhüllung (5) ein Detektionskabel ausbilden und bei der die Umhüllung (5) aus einem Material ausgebildet ist, das ausschließlich selektiv von mindestens einer zu detektierenden Säure durchdringbar ist und bei der ein innerer Aufbau des Detektionskabels nichtselektiv von einer Mehrzahl von Säuren durchdringbar ist, dadurch gekennzeichnet, daß die Umhüllung (5) beide Leiter (1,4) koaxial umschließt und daß sich zwischen dem Innenleiter (1) und dem Außenleiter (4) ein Abstandshalter (3) erstreckt, der als eine elektrisch nichtleitende Spirale ausgebildet ist.

2. Vorrichtung nach Anspruch 1, dadurch gekennzeichnet, daß die Umhüllung (5) von der zu detektierenden Flüssigkeit auflösbar ist.

3. Vorrichtung nach Anspruch 1 oder 2, dadurch gekennzeichnet, daß die Umhüllung (5) von der zu tierenden Flüssigkeit aufweichbar ist.

4. Vorrichtung nach einem der Ansprüche 1 bis 3, dadurch gekennzeichnet, daß die Umhüllung (5) die zu detektierende Flüssigkeit hindurchlassende und weitere Flüssigkeiten sperrende siebende Eigenschaften aufweist.

5. Vorrichtung nach einem der Ansprüche 1 bis 4, dadurch gekennzeichnet, daß der Innenleiter (1) von einer Isolierung (2) umschlossen ist.

6. Vorrichtung nach einem der Ansprüche 1 bis 5, dadurch gekennzeichnet, daß die Umhüllung (5) säureselektiv und wasserbeständig ausgebildet ist.

7. Vorrichtung nach einem der Ansprüche 1 bis 6, dadurch gekennzeichnet, daß der Außenleiter (4) als ein Metallgeflecht ausgebildet ist.

8. Vorrichtung nach einem der Ansprüche 1 bis 7, dadurch gekennzeichnet, daß die Umhüllung (5) von einem netzartigen Außenmantel (6) umschlossen ist.

## Claims

1. A device for leakage detection in the region of arrangements containing acids, which is essentially constructed from two electrical conductors (1, 4), and in which the conductors are constructed as an inner conductor (1) and an outer conductor (4) and are arranged coaxial to one another and together with a casing (5) which can be penetrated by a fluid to be detected form a detection cable, and in which the casing (5) is constructed from a material which can be exclusively selectively penetrated by at least one acid which is to be detected and in which an internal structure of the detection cable can be non-selectively penetrated by a plurality of acids, characterised in that the casing (5) encloses both conductors (1, 4) coaxially and a spacing element (3) extends between the inner conductor (1) and the outer conductor (4) and is constructed as an electrically non-conductive spiral.

2. A device according to claim 1, characterised in that the casing (5) can be dissolved by the fluid which is to be detected.

3. A device according to claim 1 or 2, characterised in that the casing (5) can be softened by the fluid which is to be detected.

4. A device according to one of claims 1 to 3, characterised in that the casing (5) has filtering properties allowing through the fluid which is to be detected and blocking further fluids.

5. A device according to one of claims 1 to 4, characterised in that the inner conductor (1) is enclosed by an insulation (2).

6. A device according to one of claims 1 to 5, characterised in that the casing (5) is constructed so as to be acid-selective and water-resistant.

7. A device according to one of claims 1 to 6, characterised in that the outer conductor (4) is constructed as a metal mesh.

8. A device according to one of claims 1 to 7, characterised in that the casing (5) is enclosed by a net-like outer sleeve (6).

## Revendications

1. Dispositif de détection de fuites dans une zone d'installations contenant des acides, lequel est prévu essentiellement sous la forme de deux conducteurs électriques (1,4) et dans le cas duquel les conducteurs sont prévus sous la forme d'un conducteur interne (1) et d'un conducteur externe (4), sont disposés dans le même axe l'un part rapport à l'autre, forment un câble de détection en commun avec une gaine (5) que peut pénétrer de part en part un liquide à soumettre à la détection, dispositif dans le cas duquel également la gaine (5) est formée d'une matière qui peut être pénétrée de part en part exclusivement sélectivement par au moins un acide à soumettre à la détection et dans le cas duquel une structure interne du câble de détection peut être pénétrée de part en part non sélectivement par plusieurs acides, le dispositif étant caractérisé en ce que la gaine (5) enveloppe les deux conducteurs (1, 4) coaxialement et en ce qu'entre le conducteur interne (1) et le conducteur externe (4) se trouve un élément distanceur (3) qui a été prévu sous la forme d'un élément hélicoïdal non conducteur de l'électricité.

2. Dispositif suivant la revendication 1, caractérisé en ce que la gaine (5) peut être dissoute par le liquide à soumettre à la détection.

3. Dispositif suivant l'une ou l'autre des revendications 1 et 2, caractérisé en ce que la gaine (5) peut être ramollie par le liquide à soumettre à la détection.

4. Dispositif suivant l'une quelconque des revendications 1 à 3, caractérisé en ce que la gaine (5) présente des propriétés telles qu'elle laisse passer le liquide à soumettre à la détection et qu'elle bloque le passage d'autres liquides.

5. Dispositif suivant l'une quelconque des revendications 1 à 4, caractérisé en ce que le conducteur interne (1) est entouré d'une enveloppe isolante (2).

6. Dispositif suivant l'une quelconque des revendications 1 à 5, caractérisé en ce que la gaine (5) a été prévue de façon qu'elle soit sélective aux acides et qu'elle soit résistante à l'eau.

7. Dispositif suivant l'une quelconque des revendications 1 à 6, caractérisé en ce que le conducteur externe (4) a été fait d'un tissu tressé de métal.

8. Dispositif suivant l'une quelconque des revendications 1 à 7, caractérisé en ce que la gaine (5) est entourée d'une enveloppe externe en réseau (6).
